# EUROPÄISCHE PATENTSCHRIFT

(11) **EP 2 675 662 B1**
(45) Veröffentlichungstag und Bekanntmachung des Hinweises auf die Patenterteilung: **21.01.2015**
(21) Anmeldenummer: 12743956.0
(22) Anmeldetag: 01.08.2012
(51) Int. Cl.: B60R 19/18, B60R 19/34

(54) **FAHRZEUGSTOSSFÄNGERANORDNUNG**
VEHICLE BUMPER ASSEMBLY
CONSTRUCTION DE PARE-CHOCS POUR VÉHICULE

(30) Priorität: 17.08.2011 DE 102011052770; 17.08.2011 DE 202011051008 U
(43) Veröffentlichungstag der Anmeldung: 25.12.2013
(73) Patentinhaber: Kirchhoff Automotive Deutschland GmbH, 57439 Attendorn (DE)
(72) Erfinder: LENKENHOFF, Christian, 58332 Schwelm (DE); TÖLLER, Marco, 51107 Köln (DE); LÖCKER, Markus, D-57413 Finnentrop (DE)
(74) Vertreter: Haverkamp, Jens
(86) Internationale Anmeldenummer: PCT/EP2012/064980
(87) Internationale Veröffentlichungsnummer: WO 2013/023905

(56) Entgegenhaltungen:
- EP-A2- 1 160 133
- EP-A2- 1 736 369
- WO-A1-97/03865
- DE-A1- 19 809 112
- DE-A1-102004 014 047
- DE-A1-102006 058 604

## Beschreibung

Die Erfindung betrifft eine Fahrzeugstoßfängeranordnung mit einem Stoßfängerquerträger und zumindest zwei mit Abstand zueinander angeordneten, an die Rückseite des Stoßfängerquerträgers angeschlossenen, sich mit einem ersten Ende daran abstützenden Energieabsorptionsbauteilen mit einer quer zur Längserstreckung (y-Achse) des Stoßfängers ausgerichteten Absorptionswirkrichtung (x-Richtung), welche Energieabsorptionsbauteile mit ihrem von dem Stoßfänger wegweisenden Ende zum Abstützen an ein Chassisteil eines Fahrzeuges vorgesehen sind, wobei die Energieabsorptionsbauteile in Richtung zum Stoßfängerquerträger hin eine schräge Stirnfläche aufweisen.

Zum Absorbieren von kinetischer Energie, die auf den Stoßfänger eines Fahrzeuges im Falle eines Unfalls insbesondere im Low-Speed-Bereich wirkt, werden Energieabsorptionsbauteile - sogenannte Crashboxen - zwischen dem Stoßfänger und dem Chassis eines Fahrzeuges angeordnet. Typischerweise sind derartige Energieabsorptionsbauteile an die dem Chassis zugehörigen Fahrzeuglängsträger angeschlossen. Energieabsorptionsbauteile dieser Art sind aus Metall oder einem Verbundwerkstoff gefertigt beispielsweise aus Stahlblech gefertigte kastenförmige Bauteile. Eingesetzt werden auch Aluminiumextrusionsprofile. Zum Zwecke einer Energieabsorption werden diese Energieabsorptionsbauteile in Richtung ihrer Längsachse ziehharmonikaähnlich bzw. nach Art eines Balges zusammengefaltet, durch welchen Umformprozess die Aufprallenergie absorbiert wird. Aufgrund des Stauchvorganges, bei welchem diese Bauteile in der vorbeschriebenen Weise zusammengefaltet werden, erfolgt zugleich eine Verzögerung des Aufpralls in das Chassis des Fahrzeuges. Bei diesen Fahrzeugstoßfängeranordnungen sind die Ebenen der vorderen Endstirnflächen des Energieabsorptionsbauteils entweder entsprechend der Krafteinleitung des AZT Strukturtest, also im Winkel von 10° zur y-z-Ebene um die x-Achse, oder in Richtung der y-z-Achse angeordnet (AZT: Allianz Zentrum für Technik).

Es hat sich gezeigt, dass zum Ingangsetzen des Faltprozesses für die Zwecke einer Energieabsorption zunächst eine Kraftspitze - ein sogenannter Anfangspeak - überwunden werden muss. Ist die Kraftspitze, mit der ein erster Umformprozess eingeleitet wird, überwunden, setzt sich der Faltvorgang des Energieabsorptionsbauteils mit bereits deutlich geringerer Krafteinleitung fort. Bei einem Energieabsorptionsbauteil aus einer Aluminiumlegierung kann der Anfangspeak 30 bis 40 Prozent über der Höhe der für das Fortlaufenlassen des Faltvorganges notwendigen Kraft liegen. Ein solches Energieabsorptionsbauteil ist hinsichtlich seiner Energieabsorption dergestalt auszulegen, dass die Gefahr einer bleibenden Verformung des Chassisteils, also beispielsweise des Längsträgers, an das das Energieabsorptionsbauteil angeschlossen ist, erst eintritt, wenn das Energieabsorptionsbauteil auf Block zusammengefaltet worden ist, mithin seine Eigenschaft als Energieabsorptionsbauteil verloren hat. Aus diesem Grunde muss die Höhe des Anfangspeaks zum Ingangsetzen der Energieabsorption eines solchen Bauteils unterhalb derjenigen Kraft liegen, bei der eine bleibende Verformung des Chassisteils einsetzt bzw. zu befürchten ist, an das das bzw. die Energieabsorptionsbauteile angeschlossen sind. Damit wird die mögliche Energieaufnahme bei der Konzeption eines solchen Energieabsorptionsbauteils maßgeblich durch die Höhe des Anfangspeaks, also: Durch die Höhe der zum Ingangsetzen des Energieabsorptionsprozesses notwendigen Kraft bestimmt.

Um diesem Nachteil zu begegnen, sind Energieabsorptionsbauteile der genannten Art entwickelt worden, in die Schwächungen eingebracht worden sind, beispielsweise durch Einprägen vorgegebener Knick- bzw. Faltlinien oder durch Einbringen von Löchern. Zwar kann mit derartigen Maßnahmen die Höhe des Anfangspeaks reduziert werden, doch dies erfordert zusätzliche kostenintensive Arbeitsschritte. Daher besteht der Wunsch, derartige Energieabsorptionsbauteile im Hinblick auf die angesprochene Problematik weiter zu verbessern. Überdies wäre es wünschenswert, wenn die Länge eines solchen Energieabsorptionsbauteils möglichst gering gehalten werden kann.

In WO 97/03865 A1 ist eine Stoßfängeranordnung beschrieben, bei der das Energieabsorptionsbauteil als extrudiertes Aluminiumlegierungsbauteil gefertigt ist. Die zu einem Stoßfängerquerträger weisende Stirnfläche des als Hohlkammerprofil ausgeführten Energieabsorptionsbauteils ist schräg ausgeführt. Der Stoßfängerquerträger verfügt über eine Aufnahme, in die das schräge Ende des Energieabsorptionsbauteils eingesetzt ist. Gegenüber der Rückseite des Stoßfängerquerträgers ist die sich daran mit einem Punktkontakt abstützende Schrägfläche des Energieabsorptionsbauteils winklig unter Belassung eines Winkelspaltes angeordnet. Bei dieser vorbekannten Stoßfängeranordnung besteht die Gefahr, dass die bestimmungsgemäße Anordnung zwischen dem Stoßfängerquerträger und dem Energieabsorptionsbauteil sich im Falle eines Aufpralls zueinander verändert. Zudem ist bei der Herstellung der Teile und einer Montage derselben sehr genau darauf zu achten, dass zur Realisierung der Punktabstützung der beschriebene Spalt zwischen der Stirnfläche des Energieabsorptionsbauteils und der Rückseite des Stoßfängerquerträgers vorhanden ist.

Aus DE 196 35 285 A1 ist eine Seitenrahmenstruktur für Fahrzeuge bekannt. Die Seitenrahmenstruktur besteht aus zwei U-förmigen Halbschalensegmenten. Diese Seitenrahmenstruktur dient dem Zweck, dass erst bei einem mittelschweren Aufprall eine Airbagzündung erfolgt. Zu diesem Zweck ist die Stirnseite der Seitenrahmenstrukturen bezüglich seines oberen Segmentes gegenüber der Rückseite des Stoßfängerquerträgers angeschrägt und das diesbezügliche Ende des unteren Segmentes von dem schrägen Enden zurückversetzt beabstandet. Die zum Stoßfängerquerträger weisende Seite dieser Seitenrahmenstruktur ist von der Rückseite des Stoßfängerquerträgers beabstandet.

DE 10 2004 014 047 A1 offenbart ein Stoßfängersystem, welches auch bei einem zwischen dem Stoßfängerquerträger und den Längsträgern bestehenden Höhenunterschied optimiert ist. Das Energieabsorptionsbauteil dieses vorbekannten Stoßfängersystem weist keine als Ebene ausgebildete, zum Stoßfängerquerträger weisende Stirnfläche auf.

DE 198 09 112 A1 offenbart ein Fahrzeug mit Stoßstange und Deformationselement, wobei die zum Stoßfängerquerträger weisende Stirnfläche des Energieabsorptionsbauteils schräg ausgeführt ist, und zwar gedreht um die z-Achse. Die Neigung der Endebene der Energieabsorptionsbauteile wird mit 10° Grad angegeben. Die Neigungsrichtung ist ausgeführt, damit die schräg ausgerichteten Stirnfläche der Energieabsorptionsbauteile nach außen weisen.

Ausgehend von der aus DE 198 09 112 A1 bekannt gewordenen Fahrzeugstoßfängeranordnung liegt der Erfindung daher die Aufgabe zu Grunde, eine Fahrzeugstoßfängeranordnung mit einer optimierten Krafteinleitung in die Energieabsorptionsbauteile vorzuschlagen.

Gelöst wird diese Aufgabe durch eine Fahrzeugstoßfängeranordnung mit den Merkmalen des Anspruchs 1.

Bei einer solchen Fahrzeugstoßfängeranordnung steht im Vordergrund, dass die zu absorbierende Energie in das Energieabsorptionsbauteil zu Beginn eines Energieabsorptionsvorganges nur über einen Teil der Querschnittsfläche in das Energieabsorptionsbauteil eingeleitet wird, und zwar durch eine Konzentration der das Energieabsorptionsbauteil beaufschla-genden Kraft im Falle eines auf den Stoßfänger wirkenden Aufpralls auf den hierzu vorgesehenen Stirnflächenbereich des Energieabsorptionsbauteils. Da diese Fläche nur ein Bruchteil der Gesamtquerschnittsfläche des Energieabsorptionsbauteils ist, wird die anliegende Kraft auf diesen Bereich konzentriert und kann sodann einen Energieabsorptionsprozess, zunächst beschränkt auf diesen Teilquerschnittsbereich durch Beginn eines Faltvorganges auslösen. Hierzu ist vorgesehen, dass das Energieabsorptionsbauteil stoßfängerseitig eine schräge, sich insgesamt oder im Wesentlichen insgesamt an der Rückseite eines Stoßfängerquerträgers abstützende Stirnfläche aufweist und mit dem Stoßfängerquerträger verbunden ist. Das Energieabsorptionsbauteil kann mit dem Stoßfängerquerträger durch Befestiger, Nieten oder dergleichen oder auch durch einen Fügeprozess verbunden sein, ebenso wie eine Klebeverbindung. Dass vor allem Füge- und Klebeverbindungstechniken bei dieser Fahrzeugstoßfängeranordnung möglich sind, liegt in der beanspruchten Abstützanordnung von Energieabsorptionsbauteil und Stoßfängerquerträger begründet. Von besonderem Vorteil bei der beanspruchten Stoßfängeranordnung ist zudem, dass ein Anschluss der schrägen Stirnfläche des Energieabsorptionsbauteils an die Rückseite des Stoßfängerquerträgers ohne weiteres möglich ist und auf diese Weise auch der Stoßfängerquerträger einen stabilen Anschluss an das bzw. die Energieabsorptionsbauteile erfährt. Beim Gegenstand der beanspruchten Erfindung ist es nicht erforderlich, auf besondere Spaltmaße oder Winkelstellungen zu achten. Darüber hinaus bleibt beim Gegenstand der beanspruchten Stoßfängeranordnung die Geometrie in der Abstützung zwischen dem Stoßfängerquerträger und dem Energieabsorptionsbauteil konstant.

Zudem ist bei der beanspruchten Fahrzeugstoßfängeranordnung vorgesehen, dass die Ebene der zum Stoßfänger weisenden Stirnfläche des Energieabsorptionsbauteils und damit der Stoßfängerquerträger mit seiner Vorderseite winklig zu der zur Krafteinleitungsrichtung des AZT-Strukturtests verlaufenden orthogonalen Ebene angeordnet ist. Hinweise, dass es vorteilhaft sein könnte, sich von der gängigen Praxis, den Stoßfängerquerträger hinsichtlich seiner Vertikalebene parallel zu der Barriere gemäß dem AZT Strukturtest anzuordnen, zu lösen und diese Praxis zu verlassen, können dem Stand der Technik nicht entnommen werden.

Durch die beanspruchte Fahrzeugstoßfängeranordnung ist nicht nur durch entsprechende Auslegung des Energieabsorptionsbauteils - das heißt insbesondere seines Materiales, seiner Querschnittsgeometrie und der Bemessung des Anteiles der Querschnittsfläche für eine erste Krafteinleitung zum Ingangsetzen des Energieabsorptionsprozesses - eine Ausbildung eines Anfangspeakes so gut wie gänzlich vermieden, sondern zudem lässt sich diese mit einem geringen Bearbeitungs- und Montageaufwand erstellen.

Besonders positiven Einfluss auf die Vermeidung bzw. Reduzierung eines kraftbezogenen Anfangspeakes zum Auslösen des Energieabsorptionsprozesses liegt in der beanspruchten Anlageanordnung zwischen Energieabsorptionsbauteil und Stoßfängerquerträger begründet. Auf Grund der Schrägstellung des Stoßfängerquerträgers mit seiner vertikalen Ebene zu der Frontseite der Barriere wird im Zuge eines Energieabsorptionprozesses der Stoßfängerquerträger, wenn dieser eine hinreichende Stabilität aufweist, zum Chassis des Fahrzeuges hin um eine horizontale Querachse gedreht werden, so dass im Zuge des fortschreitenden Energieabsobtionsprozesses der Stoßfängerquerträger erst dann flächig an der Frontseite der Barriere anliegt, wenn die Kraft in die gesamte Querschnittsfläche des Energieabsorptionsbauteils eingeleitet wird. Die Anlageanordnung zwischen dem Energieabsorptionsbauteil mit seiner zu dem Stoßfängerquerträger weisenden Stirnfläche an dem Stoßfängerquerträger ändert sich dabei nicht. Aus diesem Grund bleibt die Krafteinleitungsgeometrie in das Energieabsorptionsbauteil während eines Energieabsorptionsprozesses zumindest weitestgehend konstant. Insofern wirkt auf eine definierte Krafteinleitung in ein Energieabsorptionsbauteil der Stoßfängerquerträger durch seine räumliche Anordnung und Abstützung krafteinleitungsgeometrieerhaltend. Überdies kann der vorbeschriebene Herstellungsprozess des Stoßfängerquerträgers als weitere Größe in die Auslegung der Energieabsorption und insbesondere in die zum Umformen des Energieabsorptionsbauteils notwendige Kraft eingebunden werden.

Wenn im Rahmen dieser Ausführungen die Rede einer Abstützung des Energieabsorptionsbauteils mit seiner Stirnfläche an der Rückseite des Stoßfängerquerträgers die Rede ist, bei dem im wesentlichen die gesamte Stirnfläche des Energieabsorptionsbauteils an der Rückseite des Stoßfängerquerträgers abgestützt ist, ist hierunter zu verstehen, dass in der Abstützanordnung durchaus Bereiche bzw. Abschnitte vorhanden sein können, in denen die Stirnfläche nicht an der Rückseite des Stoßfängerquerträgers anliegt, beispielsweise weil in diesem Bereich Ausprägungen, wie beispielsweise Rippen oder Sicken im Stoßfängerquerträger vorhanden sind. Wesentlich ist, dass eine für die Montage stabile Abstützanordnung zwischen den beiden Bauteilen gegeben ist.

Ein solches Energieabsorptionsbauteil ist typischerweise aus Metall oder einem Verbundwerkstoff gefertigt.

Durch die vorbeschriebene Kraftkonzentration kann bei gleicher Energieabsorptionskapazität wie ein herkömmliches Energieabsorptionsbauteil ein erfindungsgemäßes Energieabsorptionsbauteil kürzer ausgeführt werden als ein solches, welches zu seiner Schwächung entsprechende Durchbrechungen aufweist.

Bei den in Rede stehenden Energieabsorptionsbauteilen handelt es sich typischerweise um kastenförmige Hohlkammerprofile. In Abhängigkeit von der Raumlage der Ebene der Stirnfläche des Energieabsorptionsbauteils kann die anliegende Kraft auf eine Kammerwand oder auch auf eine Kante bzw. einen Kantenbereich konzentriert werden.

Ist der Energieabsorptionsprozess durch Anlegen eines ersten beginnenden Faltprozesses initiiert, wird bei anhaltender Krafteinleitung die mit der Kraft beaufschlagte Querschnittsfläche des Energieabsorptionsbauteils zunehmend größer, so lange bis die anliegende Kraft über die gesamte Querschnittsfläche des Energieabsorptionsbauteils verteilt in dieses eingeleitet wird.

Bei einer winkligen Ausrichtung der stoßfängerseitigen Endebene des Energieabsorptionsbauteils, wie vorbeschrieben, wird eine winklige Anordnung von 1° bis 8°, typischerweise von 3° bis 6° und insbesondere von 4° zur orthogonal zu der Krafteinleitungsrichtung liegenden Ebene bzw. zu der Anprallebene des AZT-Strukturtests als ausreichend angesehen. Es versteht sich, dass die Wahl dieses Winkels die Länge des Energieabsorptionsbauteils beeinflusst. Aus diesem Grunde wird man diesen Winkel möglichst klein auswählen.

Weitere Vorteile und Ausgestaltungen der Erfindung ergeben sich aus der nachfolgenden Beschreibung von Ausführungsbeispielen. Es zeigen:
- **Fig. 1:**: eine schematisierte Darstellung einer Fahrzeugstoßfängeranordnung in einer Querschnittsdarstellung,
- **Fig. 2:**: die Anordnung der Figur 1 zu Beginn einer Krafteinleitung,
- **Fig. 3:**: ein Kraft-Weg-Diagramm zum Darstellen der für die Verformung von Energieabsorptionsbauteilen benötigten Kraft,
- **Fig. 4:**: eine schematisierte perspektivische Darstellung der Stoßfängeranordnung der Figur 2,
- **Fig. 4a:**: eine realitätsnähere Seitenansicht der Stoßfängeranordnung der Figur 1 und
- **Fig. 5:**: eine schematisierte Darstellung entsprechend denjenigen der Figuren 3 und 4, darstellend den Beginn eines Energieabsorptionsvorganges bei einer Stoßfängeranordnung gemäß einem Stand der Technik.

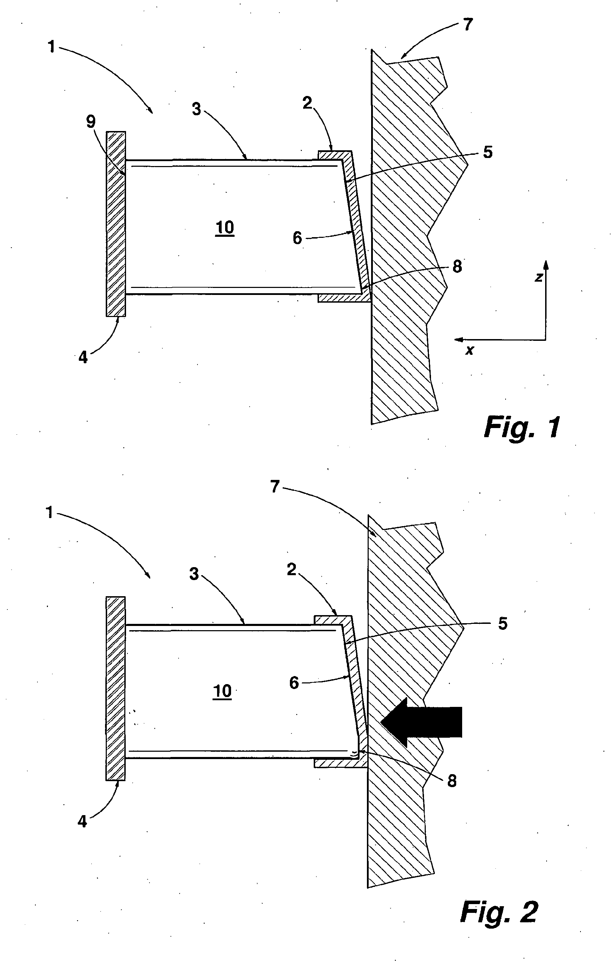

Figur 1 zeigt eine Fahrzeugstoßfängeranordnung 1. Figur 1 zeigt die Stoßfängeranordnung 1 mit einem Stoßfängerquerträger 2. Der Stoßfängerquerträger 2 ist ohne eine ansonsten typische, in Querrichtung verlaufende Versteifungsprofilierung dargestellt und bildet somit die Rückseite des Stoßfängers, an der mit Abstand in Richtung zum Fahrzeug (x-Richtung) zwei Energieabsorptionsbauteile 3 angeordnet sind. In der Querschnittsdarstellung ist in Figur 1 nur ein Energieabsorptionsbauteil 3 erkennbar. Die Darstellungsebene der Figur 1 ist mit den üblichen Koordinaten angegeben. Die Energieabsorptionsbauteile 3 verbinden den Stoßfängerquerträger 2 mit dem Chassis des Fahrzeuges, wobei bei dem dargestellten Ausführungsbeispiel die Energieabsorptionsbauteile 3 an jeweils einen Längsträger des Chassis angeschlossen sind. In Figur 1 ist eine Verbindungsplatte (Baseplate) zur Anbindung an den Längsträger, an das Energieabsorptionsbauteil 3 angeschlossen, mit dem Bezugszeichen 4 gekennzeichnet.

Bei dem Energieabsorptionsbauteil 3 des dargestellten Ausführungsbeispiels handelt es sich um ein Profil aus einem Metall aus einer zur Ausbildung eines Energieabsorptionsbauteils - einer sogenannten Crashbox - geeigneten Materialvariante, beispielsweise einer geeigneten Aluminiumlegierung. Bei dem Energieabsorptionsbauteil kann es sich um ein Strangpressprofil handeln, welches durchaus auch mehrkammerig konzipiert sein kann. Das Energieabsorptionsbauteil 3 verfügt über eine erste Stirnfläche 5, die zum Stoßfängerträger 2 weist und sich bei dem dargestellten Ausführungsbeispiel vollflächig und damit mit seiner gesamten Stirnfläche 5 an der Rückseite 6 daran abstützt. In nicht näher dargestellter Art und Weise ist das Energieabsorptionsbauteil 3 mechanisch unter Verwendung von Befestigern mit dem Stoßfängerträger 2 verbunden.

Zusätzlich ist eine Barriere 7 gemäß dem AZT Strukturtest dargestellt. Der Stoßfängerquerträger 2 liegt mit einem Teilbereich seiner Vorderseite daran zum Darstellen einer Krafteinleitung in das Energieabsorptionsbauteil 3 bei einem Aufprall an. Die Darstellung der Figur 1 verdeutlicht, dass der Stoßfängerquerträger 2 mit seiner z-Ebene winklig zur Ebene der Frontseite der Barriere 7 angeordnet ist. Dies ist die Folge, dass sich die gesamte Stirnfläche 5 des Energieabsorptionsbauteils 3 an der Rückseite des Stoßfängerquerträgers 2 abstützt. Bei der winkligen Anordnung zwischen der Frontseite des Stoßfängerquerträgers 2 des dargestellten Ausführungsbeispiels und der hierzu weisenden Frontseite der Barriere 7 ist die winklige Anordnung derart vorgesehen, dass die unterste Wand des Energieabsorptionsbauteils 10 länger ist als die obere. Die winkelige Anordnung des Stoßfängerquerträgers zu der Frontseite der Barriere kann auch dadurch erreicht werden, dass die obere Wand des Energieabsorptionsbauteils länger ist als die untere.

Von Besonderheit bei dem Energieabsorptionsbauteil 3 ist, dass in dieses (an seiner Stirnfläche 5) zu Beginn einer Aufprallenergieaufnahme nur bereichsweise - bei dem dargestellten Ausführungsbeispiel an seiner unteren, in y-Richtung verlaufenden Kante die Kraft des Anpralls in das Energieabsorptionsbauteil 3 eingeleitet wird. Die hintere Stirnfläche 9 des Energieabsorptionsbauteils 3 stützt sich chassisseitig an der Verbindungsplatte 4 ab, die wiederum in nicht näher dargstellter Art und Weise an dem Längsträger befestigt ist. Die Anbindung des Energieabsorptionsbauteils 3 an die Verbindungsplatte 4 ist in den Figuren nicht dargestellt.

Aufgrund der nur bereichsweisen Einleitung von Aufprallenergie in das Energieabsorptionsbauteils 3 wird bei einem Aufprall - durch den Blockpfeil in Figur 2 dargestellt - die auf das Energieabsorptionsbauteil 3 einwirkende Kraft in einer ersten Phase der Einleitung der Aufprallenergie auf seine in Figur 2 untere Wand 8 konzentriert. Mithin unterliegen zunächst nur die Wand 8 des Energieabsorptionsbauteils 3 bzw. auch die angrenzenden Bereiche einer Deformation, bevor mit zunehmender Krafteinleitung in das Energieabsorptionsbauteil 3 die weiteren Wandabschnitte in den Energieabsorptionsprozess eingebunden werden, bis die Aufprallenergie in die gesamte Querschnittsfläche des Energieabsorptionsbauteils 3 eingeleitet wird. Unterstützt wird die zu Beginn eines Energieabsorptionsvorganges selektive Krafteinleitung durch die zumindest weitestgehehend vollflächige Anlage der geneigten Stirnfläche 5 des Energieabsorptionsbauteils an der Rückseite 6 des Stoßfängerquerträgers 2. Hierdurch ist eine Krafteinleitungsgeometrie gleich bleibend, zumindest annähernd gleich bleibend, gewährleistet Infolge der Energieabsorption faltet sich das Energieabsorptionsbauteil 3 balgartig zusammen. In Figur 2 ist der Beginn einer Energieabsorption durch Faltenbildung im Bereich der Wand 8 erkennbar. Infolge der Kraftkonzentration auf die Stirnfläche der Wand 8 kann der Faltprozess und damit die Energieabsorption initiiert werden, ohne dass ein nennenswerter Anfangspeak überwunden werden muss. Vielmehr ist das Energieabsorptionsbauteil 3 dergestalt ausgelegt, dass die zum Durchführen des Umformvorganges notwendige Kraft über die Längserstreckung des Energieabsorptionsbauteils 3 weitestgehend gleich bleibt. Dadurch ist es möglich, das Energieabsorptionsbauteil 3 so auszulegen, dass die für die Energieabsorption notwendige Kraft über die gesamte Länge des Energieabsorptionsbauteils 3 so groß sein kann, dass das Lastniveau des Längsträgers nicht überschritten wird.

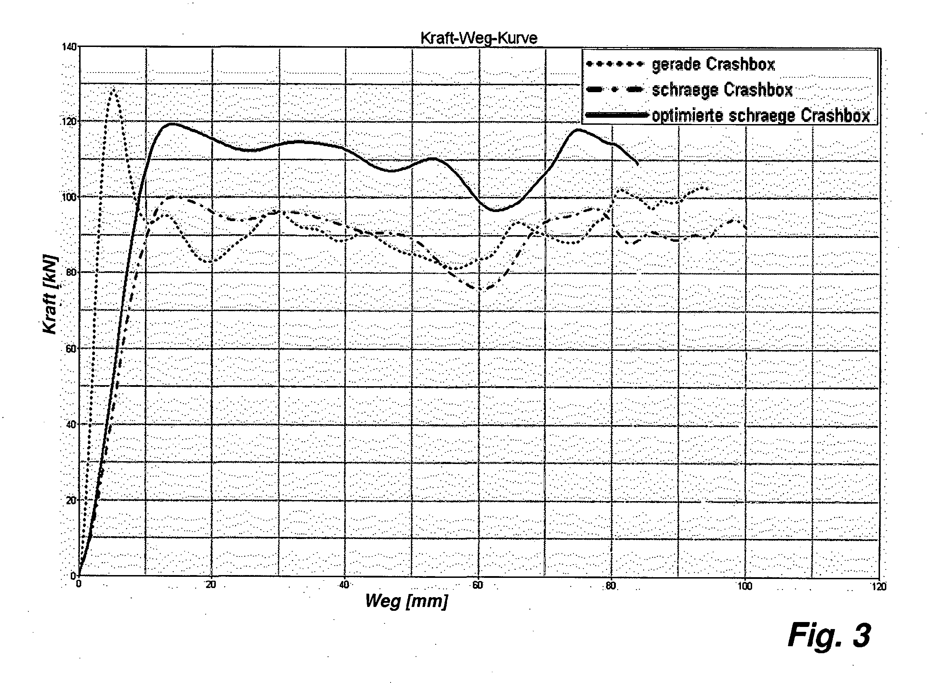

Figur 3 zeigt in einer Gegenüberstellung drei Kraft-Weg-Kurven, wobei diejenige des vorbeschriebenen Ausführungsbeispiels die Kurve mit durchgezogener Strichführung ist. Das Lastniveau des Längsträgers liegt in diesem Beispiel bei etwa 130kN. Der Energieabsorptionsvorgang beginnt bei dem Energieabsorptionsbauteil 3 bei etwa 120 kN und bleibt wie aus Figur 3 ersichtlich unterhalb dieses Wertes und auf einem weitgehend einheitlichen Kraftniveau.

Der Kraft-Weg-Kurve des Energieabsorptionsbauteils 3 ist in Figur 3 eine entsprechende Kurve eines herkömmlichen Energieabsorptionsbauteils gegenübergestellt (punktierte Linienführung). Dieses herkömmliche Energieabsorptionsbauteil ist mit Ausnahme der Ausführung der schrägen Stirnfläche 5 baugleich mit dem Energieabsorptionsbauteil 3. Die Gegenüberstellung macht deutlich, dass das Energieaufnahmeniveau bei diesem herkömmlichen Energieabsorptionsbauteil, nachdem der Anfangspeak überwunden worden ist, deutlich unter demjenigen des optimierten Energieabsorptionsbauteils 3 liegt, da durch dessen gekippte Stirnfläche der Anfangspuls nahezu verschwindet und bei gleicher Maximalkraft auf den Längsträger das allgemeine Lastniveau des Energieabsorptionsbauteils 3 durch eine Aufdickung der Wandstärke heraufgesetzt werden kann. Hieraus erschließt sich der weitere Vorteil des Energieabsorptionsbauteils 3, namentlich, dass dieses zum Absorbieren derselben Energie kürzer ausgestaltet sein kann, was Vorteile in der Gesamtfahrzeugkonzeptionierung mit sich bringt. Dieser Vorteil kann auch bei einer nicht notwendigen oder gewünschten Verkürzung des Energieabsorptionsbauteils genutzt werden, in dem die Wandstärken des Energieabsorptionsbauteils gegenüber Herkömmlichen reduziert sein können. Entsprechend geringer ist auch der notwendige Materialeinsatz. Strichpunktiert ist in dem Diagramm der Figur 3 ein weiteres Energieabsorptionsbauteil gemäß der beanspruchten Erfindung eingezeichnet. Dieses ist hinsichtlich seiner Energieabsorptionskapazität nicht optimiert. Daher verläuft die Kurve der Energieabsorption etwa auf dem Niveau der Kurve des herkömmlichen Energieabsorptionsbauteils, nachdem deren Anfangspeak überwunden worden ist. Deutlich erkennbar ist auch bei dieser Kurve, dass kein, zumindest kein nennenswerter Anfangspeak vorhanden ist. Bei dem Energieabsorptionsbauteil 3, das in dem Diagramm als optimierte schräge Crashbox bezeichnet ist, sind zur Optimierung der Energieabsorptionskapazität die Wandstärken etwas stärker ausgelegt, um das dargestellte hohe Energieabsorptionsniveau über die gesamte Länge des Energieabsorptionsbauteils in x-Richtung zu erhalten.

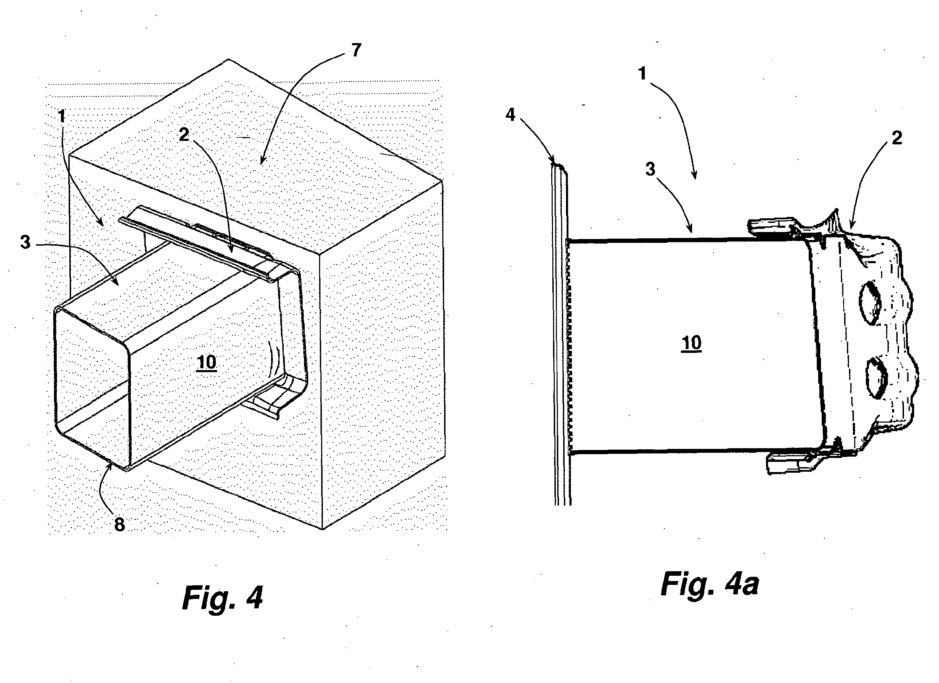

Figur 4 zeigt das Energieabsorptionsbauteil 3 in einer schematisierten perspektivischen Ansicht mit einer Andeutung des Beginns der Faltenbildung, erkennbar an der an die Wand 8 grenzenden Seitenwand 10. Die Faltenbildung ist lediglich schematisiert gezeigt und soll erläutern, dass eine Faltenbildung in der Wand 8 und den daran angrenzenden Seitenwänden 10 des Energieabsorptionsbauteils 3 beginnt. Die Faltenbildung bzw. der Umformprozess setzt sich in x-Richtung - Längsrichtung des Energieabsorptionsbauteils 3 - fort und bindet bei anhaltender Krafteinleitung sukzessive einen größer werdenden Querschnittsanteil des Energieabsorptionsträgers 3 ein bis die gesamte Querschnittsfläche in den Energieabsorptionsvorgang eingebunden ist.

Figur'4 zeigt, dass es sich bei dem Energieabsorptionsbauteil 3 des dargestellten Ausführungsbeispiels um ein einkammeriges Hohlkammerprofil handelt. Es versteht sich, dass die dargestellte Auslegung des Energieabsorptionsbauteils 3 beispielhaft ist und auch dieses auch mehrkammerig ausgeführt sein kann. Figur 4a zeigt in einer realitätsnäheren Darstellung die Stoßfängeranordnung 1 mit dem Energieabsorptionsbauteil 3, angeschlossen an den Stoßfängerquerträger 2.

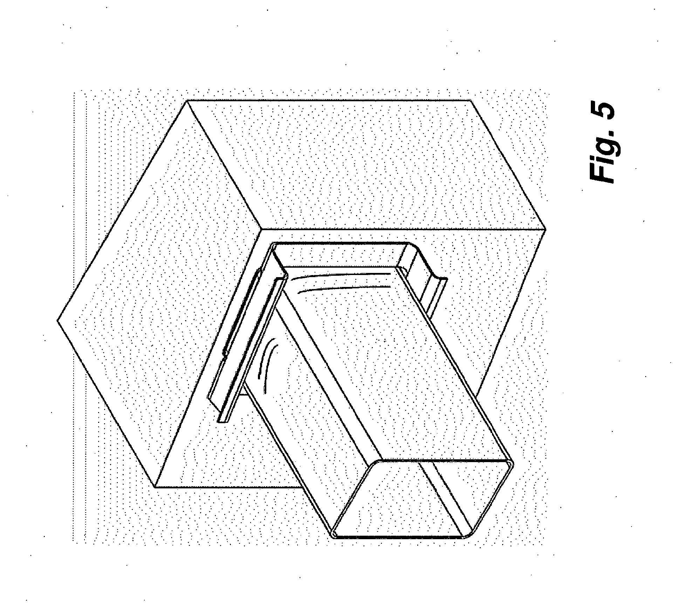

Figur 5 zeigt zum Vergleich mit den vorbeschriebenen Ausführungsbeispielen der beanspruchten Erfindung eine Fahrzeugstoßfängeranordnung gemäß dem Stand der Technik, bei der die Einleitung der Aufprallenergie von Anfang an über die gesamte Stirnfläche des Energieabsorptionsbauteils in dieses eingeleitet wird. Wie bereits vorstehend zum Stand der Technik beschrieben, beginnt der Energieabsorptionsprozess (Beginn der Faltenbildung) erst nach einem kraftmäßig hohen Anfangspeak, so wie dieses in Figur 3 durch die gepunktet dargestellte Kurve gezeigt ist.

Die Erfindung ist anhand von Ausführungsbeispielen beschrieben worden. Die Erfindung kann auch auf andere Weise ausgeführt werden, welche weiteren Ausgestaltungen sich für einen Fachmann ohne den Umfang der geltenden Ansprüche zu verlassen, ohne weiteres ergeben. So ist es beispielsweise prinzipiell möglich, die beschriebenen Mechanismen auch der zum Längsträger weisenden Stirnfläche des jeweiligen Energieabsorptionsbauteils zuzuordnen.

### Bezugszeichenliste

- 1.: Fahrzeugstoßfängeranordnung
- 2: Stoßfängerquerträger
- 3: Energieabsorptiorisbauteil
- 4: Verbindungsplatte (Baseplate)
- 5: Stirnfläche
- 6: Rückseite
- 7: Barriere
- 8: Wand
- 9: Stirnfläche
- 10: Seitenwand

## Patentansprüche

1. Fahrzeugstoßfängeranordnung mit einem Stoßfängerquerträger (2) und zumindest zwei mit Abstand zueinander angeordneten, an die Rückseite des Stoßfängerquerträgers (2) angeschlossenen, sich mit einem ersten Ende daran abstützenden Energieabsorptionsbauteilen (3) mit einer quer zur Längserstreckung (y-Achse) des Stoßfängers ausgerichteten Absorptionswirkrichtung (x-Richtung), welche Energieabsorptionsbauteile (3) mit ihrem von dem Stoßfängerquerträger (2) wegweisenden Ende zum Abstützen an ein Chassisteil (4) eines Fahrzeuges vorgesehen sind, wobei die Energieabsorptionsbauteils (3) in Richtung zum Stoßfängerquerträger (2) hin eine schräge Stirnfläche (5) aufweisen, wobei die gesamte oder im wesentlichen die gesamte Stirnfläche (5) des Energieabsorptionsbauteils (3) sich an der Rückseite (6) des Stoßfängerquerträgers (2) abstützt, **dadurch gekennzeichnet, dass** entweder die unterste Wand des Energieabsorptionsbauteils (3) länger ist als die obere oder die obere Wand länger als die untere ist, wobei die Ebene der zum Stoßfänger weisenden Stirnfläche (5) des jeweiligen Energieabsorptionsbauteils (3) und damit der Stoßfängerquerträger (2) mit seiner Vorderseite winklig zu der zur Krafteinleitungsrichtung des AZT-Strukturtests verlaufenden orthogonalen Ebene angeordnet ist, so dass zu Beginn einer Aufprallenergieaufnahme die Aufprallenergie je nach Ausbildung des Energieabsorptionsbauteils (3) entweder nur in seine untere, in y- Richtung verlaufende Kante oder in seine obere Kante eingeleitet wird.

2. Fahrzeugstoßfängeranordnung nach Anspruch 1, **dadurch gekennzeichnet, dass** die Frontseite des Stoßfängerquerträgers (2) und die orthogonal zur Krafteinleitungsrichtung des AZT-Strukturtests verlaufende Ebene einen sich in vertikaler Richtung nach oben oder nach unten öffnenden Winkel einschließen.

3. Fahrzeugstoßfängeranordnung nach Anspruch 1 oder 2, **dadurch gekennzeichnet, dass** die die Ebene der Stirnfläche des Energieabsorptionsbauteils definierenden Vektoren nicht parallel zur z-Richtung und/oder zur y-Richtung verlaufen.

4. Fahrzeugstoßfängeranordnung nach Anspruch 3, **dadurch gekennzeichnet, dass** die Ebene der Frontfläche des Stoßfängerquerträgers (2) zu der zur Krafteinleitungsrichtung orthogonalen Ebene mit 1° bis 8° geneigt ist.

5. Fahrzeugstoßfängeranordnung nach Anspruch 4, **dadurch gekennzeichnet, dass** die Ebene der Frontfläche des Stoßfängerquerträgers (2) zu der zur Krafteinleitungsrichtung orthogonalen Ebene mit etwa 4° geneigt ist.

## Claims

1. A vehicle bumper assembly having a bumper cross-member (2) and at least two energy-absorption components (3) which are arranged at a distance from one another, and are connected to the rear of the bumper cross-member (2) on which they are supported by a first end, and which have an absorption effective direction (x direction) oriented square to the longitudinal extension (y axis) of the bumper, said energy-absorption components (3) being designed to be supported on a chassis part (4) of a vehicle by their end that faces away from the bumper cross-member (2), with the energy-absorption components (3) exhibiting an oblique end face (5) towards the bumper cross-member (2), with the entire or essentially the entire end face (5) of the energy-absorption component (3) being supported on the rear face (6) of the bumper cross-member (2), wherein either the lower wall of the energy-absorption component (3) is longer than the upper or the upper wall is longer than the lower, with the plane of the end face (5) of the respective energy-absorption component (3) facing the bumper, and hence the bumper cross-member (2) with its front face, being arranged at an angle to the plane running orthogonally to the force application direction of the AZT structure test such that at the beginning of an impact energy absorption, and depending on the configuration of the energy-absorption component (3), the impact energy is introduced either only into its lower edge which runs in the y direction, or into its upper edge.

2. The vehicle bumper assembly of claim 1 wherein the front side of the bumper cross-member (2) and the plane that runs orthogonally to the force application direction of the AZT structure test enclose an angle which opens out vertically upward or downward.

3. The vehicle bumper assembly of claim 1 or 2 wherein the vectors defining the plane of the end face of the energy-absorption component do not run parallel to the z direction and/or to the y direction.

4. The vehicle bumper assembly of claim 3 wherein the plane of the front face of the bumper cross-member (2) is inclined at 1 ° to 8° to the plane orthogonal to the force application direction.

5. The vehicle bumper assembly of claim 3 wherein the plane of the front face of the bumper cross-member (2) is inclined by approximately 4 ° to the plane orthogonal to the force application direction.

## Revendications

1. Construction de pare-chocs pour véhicule comprenant un support transversal de pare-chocs (2) et au moins deux pièces d'absorption d'énergie (3) disposées à distance l'une de l'autre, raccordées au dos du support transversal de pare-chocs (2), en appui par une première extrémité sur ce dernier, dotées d'une direction active d'absorption (direction x) orientée transversalement par rapport à l'étendue longitudinale (axe y) du pare-chocs, lesquelles pièces d'absorption d'énergie (3) sont prévues pour s'appuyer par leur extrémité opposée au support transversal de pare-chocs (2) à une partie de châssis (4) d'un véhicule, les pièces d'absorption d'énergie (3) présentant vers le support transversal de pare-chocs (2) une surface frontale (5) oblique, laquelle surface frontale (5) de la pièce d'absorption d'énergie (3) s'appuyant intégralement ou presque intégralement au dos (6) du support transversal de pare-chocs (2), **caractérisée en ce que,** soit la paroi inférieure de la pièce d'absorption d'énergie (3) est plus longue que la supérieure, soit la paroi supérieure est plus longue que l'inférieure, le plan de la surface frontale (5) orientée vers le pare-chocs de chaque pièce d'absorption d'énergie (3) et par conséquent le support transversal de pare-chocs (2) étant positionné avec sa face avant en formant un angle par rapport au plan orthogonal s'étendant dans le sens d'application des forces pendant le crash test AZT, de sorte qu'au début d'une absorption d'énergie à la suite d'un choc, l'énergie du choc est, selon la configuration de la pièce d'absorption d'énergie (3), dirigée soit uniquement vers son arête inférieure, s'étendant dans le sens y, soit uniquement vers son arête supérieure.

2. Construction de pare-chocs pour véhicule selon la revendication 1, **caractérisée en ce que** la face frontale du support transversal de pare-chocs (2) et le plan s'étendant orthogonalement au sens d'application des forces pendant le crash test AZT, comprennent un angle s'ouvrant dans le sens vertical, vers le haut ou vers le bas.

3. Construction de pare-chocs pour véhicule selon la revendication 1 ou 2, **caractérisée en ce que** les vecteurs définissant le plan de la face frontale de la pièce d'absorption d'énergie ne s'étendent pas parallèlement au sens z et/ou au sens y.

4. Construction de pare-chocs pour véhicule selon la revendication 3, **caractérisée en ce que** le plan de la surface frontale du support transversal de pare-chocs (2) est incliné de 1° à 8° vers le plan orthogonal par rapport au sens d'application des forces.

5. Construction de pare-chocs pour véhicule selon la revendication 4, **caractérisée en ce que** le plan de la surface frontale du support transversal de pare-chocs (2) est incliné d'environ 4° vers le plan orthogonal par rapport au sens d'application des forces.
